# EUROPEAN PATENT APPLICATION

(11) **EP 3 617 969 A1**
(43) Date of publication of application: **04.03.2020**
(21) Application number: 18192196.6
(22) Date of filing: 03.09.2018
(51) Int. Cl.: G06Q 10/08

(54) **COMMODITY MANAGEMENT SYSTEM**

(71) Applicant: Mercuria Energy Group Holding SA, 1204 Geneva (CH)
(72) Inventor: Attwood Scott, Victoria, 1204 Geneva (CH); Cross, Alistair, 1204 Geneva (CH); Pacheco, Miguel, 1204 Geneva (CH)
(74) Representative: Hoffmann Eitle

(57) **Abstract**

A system for managing commodities, the system comprising:
- at least one interface for interfacing commodity data corresponding to at least one property of a commodity,
- an electronic platform configured to receive and to store commodity data received from the interface means,
wherein the electronic platform is configured to store commodity data within a persistence layer, and wherein the electronic platform is distributed-ledger-technology-based.

## Description

### [Field of the invention]

The invention relates to the field of safe and reliable systems for managing commodities.

### [Summary of the invention]

The invention relates to a system for managing commodities, the system comprising:
- at least one interface for interfacing commodity data corresponding to at least one property of a commodity,
- an electronic platform configured to receive and to store commodity data received from the interface means,
wherein the electronic platform is configured to store commodity data within a persistence layer, and wherein the electronic platform is distributed-ledger-technology-based.

### [Brief description of figure]

- Fig. 1: shows a basic embodiment of a commodity management system in schematic representation.
- Fig. 2: shows a further embodiment of a commodity management system.

### [Detailed description]

In the present description, the expression "managing" commodities is construed to encompass the management, the identification, and the tracking of commodities.

Examples of the invention will be described in more detail in the following. However, it is to be noted that such description is only for the purpose of providing better understanding of the concepts involved, and not meant to be limiting for the invention, which is defined by the appended claims.

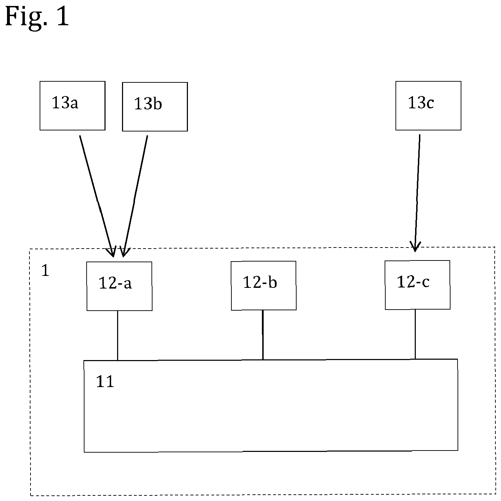

Figure 1 shows a basic embodiment in schematic representation. A system 1 for managing commodities comprises at least one interface 12-a for interfacing commodity data corresponding to at least one property of a commodity 13a, and an electronic platform 11 configured to receive and to store commodity data received from the interface means 12-a. Naturally, this is only an example, and the invention is not limited in terms of the number or nature of the interfaces or in terms of the number or nature of the commodities. As a consequence, Figure 1 shows further interfaces 12-b and 12-c as examples, as well as further commodities 13b and 13c.

The platform can be provided in any suitable and desirable way as hardware, software or a mix of hardware and software. It may comprise suitable data processing and storage means.

A commodity within the meaning of the present application is any tangible or non-tangible good that can be assigned properties representable as data. Preferably, the inventive concept is applied to the management of commodities stored in warehouse facilities.

An interface 12-a, 12-b, 12-c ... can be provided in any suitable way to receive and process data related to one or more commodities, and to send resulting commodity data to the platform 11.

Commodity data is any suitable data associated with a given commodity, e.g. data related to physical properties of the commodities, the financial operations carried out on them, etc.

In accordance with the embodiment of Fig. 1, the electronic platform 1 is configured to store the commodity data within a persistence layer.

The persistence layer is arranged to provide data persistence for the commodity data and can be provided in any suitable and desirable way, for example as a database, preferably as a relational database.

Furthermore, the electronic platform 1 is distributed-ledger-technology-based. The electronic platform thus supports a distributed ledger of at least the commodity data. Preferably, the distributed ledger comprises further data, e.g. transaction data. For example, it supports a consensus of replicated, shared, and synchronized digital data geographically spread across multiple sites, countries, or institutions. In such a case, the platform 11 may comprise one or more consensus algorithms for replicating data across nodes.

The platform 11 may e.g. be blockchain based, i.e. be based on a chain of records or blocks linked using cryptography. The blockchain may be public or private. The persistence layer may comprise one or more blocks.

The interfaces 12-a, 12-b, 12-c,... may e.g. be web interfaces. For example, the platform 1 may comprise three interfaces as shown, designed in view of given types of users. In the example, one interface is for a given group of users (e.g. 12-a for traders, 12-b for warehouse operators, and 12-c for banks). Each interface may provide various actions for inventory and financial operations (transfer, trading, etc...).

Furthermore, interfaces may be provided for linking a given commodity (e.g. 13a) in the physical world to its representation in the electronic world on the electronic platform 11. For example, an interface may employ Radio Frequency Identification (RFID) technology and/or Near Field Communication (NFC) technology to gather data from one or more commodities (e.g. in the form of reading accessible data from the commodity and/or generating data based on observing the commodities using the employed technology) and pass the gathered data to the platform 11 as commodity data. An interface may also employ Global Positioning System (GPS) technology for gathering location information associated with one or more commodities.

The one or more interfaces may be associated with one or more sensors configured to provide commodity related information to the interface, which in turn can pass this information as commodity data to the platform 11, or can process the commodity related information to generate commodity data therefrom. This is one way to link a given commodity in the physical world to its representation in the electronic world on the electronic platform 11.

The system 1 is preferably configured to manage commodities during a supply chain lifecycle. The supply chain may encompass the duration whilst the given commodity is in the custody of one of the following custodians: a commodity producer, a warehouse, a merchant trader, a commodity consumer, a funding party (a bank, a fund, an independent, etc...), or in-transit between any of the above custodians.

The commodity data stored in the platform 11 may be any suitable commodity related data. Preferably, the commodity data may be categorized as immediate commodity information (e.g. relating to one or more of the origin of the commodity, type and quality of commodity, quantity of the commodity, location of the commodity, title ownership status, insurance status, audit status and funding and encumbrance status, etc.), external data (which can in particular be electronic documents, such as one or more of certificates of origin, certificates of analysis, certificates of inspection, certificates of insurance, warehouse audit certificates, other similar documentary evidence of the physical commodities characteristics, paper of electronic bill of lading, and shipping documents; in addition, external data may or may not comprise International Commercial (INCO) terms logic), and transaction data (i.e. data reflecting the transactions concerning the commodities). Transaction data may be received from the outside, but according to a preferred embodiment, the system is configured to also generate transaction data reflecting transactions concerning the commodities.

Furthermore, the platform 11 may also be configured to generate electronic documents documenting transaction data, such as one or more of an electronic warehouse receipt, a transfer title, a trade receipt, a certificate of receipt, a delivery receipt, a payment receipt, a warehouse audit certificate, and a paper or electronic bill of lading. The electronic warehouse receipt may e.g. be smart paper-based and able to support off-platform changes in title ownership or funding status. The smart paper-based electronic warehouse receipt may be configured to carry out NFC detection mechanisms to prevent fraud and maintain integrity in the chain of title ownership, or funding status, while the commodity is off the electronic platform.

In addition to electronic documents, the platform 11 may also be configured to handle/interact with paper-based documents. Indeed, this allows the deployment of the platform 11 in territories where regulations require paper-based documents. In such a case, the paper-based documents may comprise an NFC chip or other suitable electronic recording means. These suitable electronic recording means would be a warning to any potential buyer or receiver of the warehouse receipt. The NFC chip or similar device is preferably a one-time adhesive tamper evident and/or tamper resistant NFC tag which cannot be removed from the document without permanently destroying both the tag and/or the document. The NFC chip or similar device may e.g. contain its own Unique ID which is stored on the platform 11 alongside the unique serial number of the paper document. A suitable (e.g. mobile) application may allow scanning the chip in order to verify the authenticity of the receipt/certificate, i.e. to confirm that it is not a replica. Following confirmation of an authentic receipt/certificate, the application may then provide users with information about the inventory as well as the image of the original receipt/certificate issued by the warehouse. There is thus a possibility to have a paper production, whose security relies on the existence on a transaction recorded in the distributed ledger and e.g. on a NFC chip or other suitable electronic record embedded in the certificates.
In further embodiments, the platform 11 may have documentation, such as pdfs, uploaded and stored on it. These documents may be stored on the uploader's node and a hash of that document is then stored on the platform 11 to guarantee authenticity to future recipients.

The platform may be configured to be usable to record and give effect to the transactions. In addition, users of the platform 11 will preferably not be able to view/access the transaction history of inventory on the platform, except the history of all the commodities traded by themselves. In other words, there is no visibility of the history (e.g. ownership) of the commodity before or after their ownership. This allows to protect the privacy and the user data.

The electronic platform 11 may be configured to store the transaction data within the persistence layer, and to associate the transaction data with other commodity data relating to the commodity that is the subject-matter of the transaction.

The transaction data may comprise data related to a tracking of the title ownership, the funding, and/or the encumbrance status of the commodity. The electronic platform 11 may thus be configured to support a change in title ownership status due to at least one of the following reasons: conditional release of the title, release of title upon completion of conditions, and unconditional release of title. The electronic platform 11 may furthermore be configured to support a change in funding status that includes at least one of the following elements: bilateral financing, encumbrance over the commodity, retail funding, crowd funding, ownership by third parties, ownership by retail investors, and financing with repurchase obligation.

The electronic platform 11 may include settlement logic and/or smart contracts logic to automatically enforce the terms of the bi-lateral commodities agreements to enforce and complete risk, title and payments contractual requirements.

The payment/funding carried out on the electronic platform 11 may be completed in either Fiat or crypto-currency and is able to be carried out by the transacting party or their financier.

The system may be arranged in such a way that the electronic platform 11 is configured to provide for a financial market place where financiers can bid and compete for the financing of the underlying commodity transaction on a bi-lateral or aggregated basis.

The electronic platform 11 may furthermore comprise a settlement functionality, where confirmation of payment and title transfer can be contemporaneously linked.

The electronic platform 11 may also comprise a reporting and reconciliation tool configured to provide data for traceability, sustainability and fair trade related to the underlying commodities.

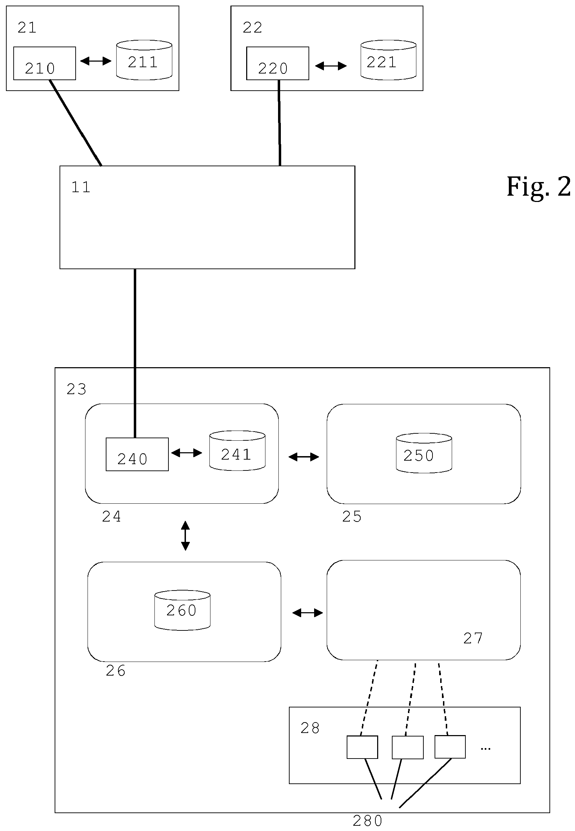

A further example of the present invention is shown in Fig. 2. Reference numeral 11 refers to an electronic platform as described in connection with Fig. 1. The platform 11, which may e.g. be provided as a blockchain network, communicates with three application entities 21, 22 and 24 in the example. 21 represents a trader application comprising at least a respective communication node 210 and database 211, 22 represents a bank application comprising at least a respective communication node 220 and database 221, and 24 represents a warehouse application comprising at least a respective communication node 240 and database 241. Naturally, this is only an example, and more or less applications can be provided.

The warehouse application 24 may be part of a warehouse system 23 associated with the interfacing of commodity data associated with one or more warehouses. The warehouse system 23 may comprise further elements, such as a legacy warehouse application 25 with a respective database 250, a server 26 (e.g. an Internet-of-Things (IoT) server) with a respective database 260, and a sensor gateway 27, which is configured to collect and process signals and data from a sensor system 28 that comprises one or more sensors 280.

The applications 21, 22, 24 and 25 may be hosted on servers interacting with databases. Each individual server may be localized or cloud-based. Equally the server 26 may be localized or cloud-based. The server gateway 27 and sensor system 28 are preferably located at the actual warehouse premises where the commodities may be physically located.

In summary, embodiments of the present invention may be as follows:
E1. System for managing commodities, the system comprising:
   - at least one interface for interfacing commodity data corresponding to at least one property of a commodity,
   - an electronic platform configured to receive and to store commodity data received from the interface means,
   wherein the electronic platform is configured to store commodity data within a persistence layer, and wherein the electronic platform is distributed-ledger-technology-based.
E2. System according to embodiment E1, wherein the electronic platform is blockchain-based.
E3. System according to embodiment E1 or E2, wherein the persistence layer comprises blocks.
E4. System according to any of the preceding embodiments, wherein the system is configured to manage commodities during a supply chain lifecycle.
E5. System according to embodiment E4, wherein the supply chain encompasses the duration whilst the commodity is in the custody of one of the following custodians:
   - a commodity producer;
   - a warehouse;
   - a merchant trader;
   - a funding party;
   - a commodity consumer, or
   - in-transit between any of the above custodians.
E6. System according to any of the preceding embodiments, wherein the commodity data comprises at least one of the following types of information:
   - the origin of the commodity;
   - type and quality of commodity;
   - quantity of the commodity;
   - location of the commodity;
   - title ownership status;
   - insurance status;
   - audit status, and
   - funding and encumbrance status.
E7. System according to any of the preceding embodiments, wherein the electronic platform is able to be enriched by external data related to the commodities, and wherein the external data is associated with the corresponding commodity data.
E8. System according to embodiment E7, wherein the external data comprises at least one of the following types of documents:
   - certificate of origin;
   - certificate of analysis;
   - certificate of inspection;
   - certificate of insurance;
   - warehouse audit certificate;
   - other similar documentary evidence of the physical commodities characteristics;
   - paper or electronic bill of lading, and
   - shipping documents.
E9. System according to embodiment E7 or E8, wherein the external data comprises International Commercial, INCO, terms logic.
E10. System according to any of the preceding embodiments, wherein the electronic platform is configured to generate transaction data reflecting transactions concerning the commodities.
E11. System according to embodiment E10, wherein the electronic platform is configured to store the transaction data within the persistence layer, and wherein the transaction data is associated with the commodity data relating to the commodity that is the subject-matter of the transaction.
E12. System according to embodiment E10 or E11, wherein the transaction data comprises data related to a tracking of the title ownership, the funding, and/or the encumbrance status of the commodity.
E13. System according to embodiment E12, wherein the electronic platform is configured to support a change in title ownership status due to at least one of the following reasons:
   - conditional release of the title;
   - release of title upon completion of conditions, and
   - unconditional release of title.
E14. System according to embodiment E12 or E13, wherein the electronic platform is configured to support a change in funding status that includes at least one of the following elements:
   - bilateral financing;
   - encumbrance over the commodity;
   - retail funding;
   - crowd funding;
   - ownership by third parties;
   - ownership by retail investors;
   - financing with repurchase obligation.
E15. System according to any of embodiments E10 to E14, wherein the electronic platform includes settlement logic and/or smart contracts logic to automatically enforce the terms of the bi-lateral commodities agreements to enforce and complete risk, title and payments contractual requirements.
E16. System according to any of embodiments E10 to E15, wherein the payment and/or funding carried out on the electronic platform is completed by either Fiat or crypto-currency and is able to be carried out by the transacting party or their financier.
E17. System according to any of embodiments E10 to E16, wherein the electronic platform is configured to provide for a financial market place where financiers can bid and compete for the financing of the underlying commodity transaction on a bi-lateral or aggregated basis.
E18. System according to any of embodiments E10 to E17, wherein the electronic platform comprises settlement functionality, where confirmation of payment and title transfer can be contemporaneously linked.
E19. System according to any of embodiments E10 to E18, wherein the electronic platform comprises a reporting and reconciliation tool configured to provide data for traceability, sustainability and fair trade related to the underlying commodities.
E20. System according to any of embodiments E10 to E19, wherein the system is configured to automatically generate one or more electronic documents documenting transaction data.
E21. System according to embodiment E20, wherein the electronic document may be one or more of:
   - an electronic warehouse receipt;
   - a transfer title;
   - a commercial contract;
   - a commercial invoice;
   - a trade receipt;
   - a certificate of receipt;
   - a delivery receipt;
   - a payment receipt;
   - a warehouse audit certificate, and
   - a paper of electronic bill of lading.
E22. System according to embodiment E21, wherein the electronic warehouse receipt is smart paper-based and is able to support off-platform changes in title ownership or funding status.
E23. System according to embodiment E22, wherein the smart paper-based electronic warehouse receipt is configured to carry out NFC detection mechanisms to prevent fraud and maintain integrity in the chain of title ownership, or funding status, while the commodity is off the electronic platform.
E24. System according to any of the preceding embodiments, wherein the at least one interface means is configured to link the commodity in the physical world to its representation in the electronic world on the electronic platform.
E25. System according to any of the preceding embodiments, wherein the at least one interface means is Radio Frequency Identification, RFID,-based or Near Field Communication, NFC, -based.
E26. System according to any of the preceding embodiments, wherein the at least one interface means is Global Positioning System, GPS, -based.
E27. System according to any of the preceding embodiments, wherein commodity data and/or transaction data form an electronic distributed ledger.

## Claims

1. System for managing commodities, the system comprising:
- at least one interface for interfacing commodity data corresponding to at least one property of a commodity,
- an electronic platform configured to receive and to store commodity data received from the interface means,
wherein the electronic platform is configured to store commodity data within a persistence layer, and wherein the electronic platform is distributed-ledger-technology-based.

2. System according to claim 1, wherein the electronic platform is blockchain-based.

3. System according to claim 1 or 2, wherein the persistence layer comprises blocks.

4. System according to any of the preceding claims, wherein the system is configured to manage commodities during a supply chain lifecycle.

5. System according to claim 4, wherein the supply chain encompasses the duration whilst the commodity is in the custody of one of the following custodians:
- a commodity producer;
- a warehouse;
- a merchant trader;
- a funding party;
- a commodity consumer, or
- in-transit between any of the above custodians.

6. System according to any of the preceding claims, wherein the electronic platform is able to be enriched by external data related to the commodities, and wherein the external data is associated with the corresponding commodity data.

7. System according to any of the preceding claims, wherein the electronic platform is configured to generate transaction data reflecting transactions concerning the commodities.

8. System according to claim 7, wherein the electronic platform is configured to store the transaction data within the persistence layer, and wherein the transaction data is associated with the commodity data relating to the commodity that is the subject-matter of the transaction.

9. System according to claim 7 or 8, wherein the electronic platform comprises a reporting and reconciliation tool configured to provide data for traceability, sustainability and fair trade related to the underlying commodities.

10. System according to any of claims 7 to 9, wherein the system is configured to automatically generate one or more electronic documents documenting transaction data.

11. System according to claim 10, wherein the electronic document is an electronic warehouse receipt that is smart paper-based and is able to support off-platform changes in title ownership or funding status.

12. System according to claim 11, wherein the smart paper-based electronic warehouse receipt is configured to carry out NFC detection mechanisms to prevent fraud and maintain integrity in the chain of title ownership, or funding status, while the commodity is off the electronic platform.

13. System according to any of the preceding claims, wherein the at least one interface means is Radio Frequency Identification, RFID,-based or Near Field Communication, NFC, -based.

14. System according to any of the preceding claims, wherein the at least one interface means is Global Positioning System, GPS, -based.

15. System according to any of the preceding claims, wherein commodity data and/or transaction data form an electronic distributed ledger.
